# EUROPÄISCHE PATENTSCHRIFT

(11) **EP 0 736 698 B1**
(45) Veröffentlichungstag und Bekanntmachung des Hinweises auf die Patenterteilung: **02.09.1998**
(21) Anmeldenummer: 96103393.3
(22) Anmeldetag: 05.03.1996
(51) Int. Cl.: F16G 11/12, B60P 7/08

(54) **Spannratsche**
Ratchet tensioning device
Dispositif de tension à cliquet

(30) Priorität: 08.04.1995 DE 29506142 U
(43) Veröffentlichungstag der Anmeldung: 09.10.1996
(73) Patentinhaber: Spanset Inter AG, 8618 Oetwil am See (CH)
(72) Erfinder: Kämper, Hans-Werner, D 55145 Würselen (DE)
(74) Vertreter: Tergau, Enno, Dipl.-Ing.

(56) Entgegenhaltungen:
- EP-A- 0 455 085
- GB-A- 2 108 616

## Beschreibung

Die vorliegende Erfindung betrifft eine Spannratsche für einen Zurrstrang mit den Merkmalen des Oberbegriffs des Anspruchs 1. Eine derartige Spannratsche ist beispielsweise bekannt aus der
**EP-A-0 455 085.**

Mit der dort offenbarten Spannratsche ist es möglich, das Rückdreh-Sicherungsgesperre schrittweise durch Hin- und Herbewegen des Spannhebels schrittweise zu lösen. Bei der bekannten Spannratsche sind die beiden Sperrschieber des Rückdrehsicherungsgesperres am Grundkörper der Spannratsche neben der Aufwickelwelle übereinander angeordnet. Zur Verringerung der Bauhöhe der Ratsche ist es aus EP-A-0 455 085 weiterhin bekannt, die Sperrschieber der Gesperre gekrümmt auszuführen.

Bei kleinen Spannratschen für Zurrstränge mit geringen Gurtbreiten bauen auch die mit gekrümmten Schiebern versehenen, bekannten Spannratschen zu hoch. Die bekannten Spannratschen fügen sich dann nicht mehr harmonisch in den textilen Zurrstrang ein.

Ausgehend von diesen Nachteilen liegt der Erfindung die Aufgabe zugrunde, eine gattungsmäßige Spannratsche möglichst flachbauend zu gestalten.

Diese Aufgabe ist durch die Merkmalskombination des Anspruchs 1 gelöst. Nach der Erfindung ist vorgeschlagen, die gattungsmäßige Spannratsche so zu gestalten, daß die beiden Sperrschieber bezogen auf das Sperrad einander diametral gegenüberliegend angeordnet sind und daß die Verschieberichtung der Sperrschieber mit der Mittellängsrichtung des Ratschengrundkörpers im wesentlichen kongruent ist. Der Erfindung liegt die Überlegung zugrunde, daß bei der gattungsmäßigen Spannratsche in erster Linie durch die übereinanderliegend angeordneten Schieber die störende Bauhöhe verursachen. Eine starke Krümmung der Schieber könnte zwar zur Reduzierung der Bauhöhe beitragen, würde aber die übrigen Funktionseigenschaften der Spannratsche nachteilig beeinflussen. Darüber hinaus fallen große Spannratschen für Zurrstränge mit großen Breiten ohnehin derart massiv aus, daß eine gewisse Höhe der Ratsche in Kauf genommen werden kann, während bei kleinen Spannratschen für Zurrstränge mit geringen Gurtbreiten eine zu große Ratschenhöhe störend ist. Im Verhältnis zur Ratschenbreite kann demgegenüber bei einer kleineren Ratsche eine größere Ratschenlänge gewählt werden als bei Spannratschen für große Gurtbreiten.

Die einander gegenüberliegenden geraden Schieber nach der Erfindung haben den Vorteil, daß sie nur translatorisch und nicht rotatorisch bewegt werden müssen. Dies ist insbesondere bei kleinen Schiebergrößen für kleine Spannratschen von Vorteil. Insbesondere begünstigt eine nur translatorische Schieberbewegung das Gleitverhalten der Schieber. Außerdem ist durch eine rein translatorische Schieberbewegung ein Verkanten der Schieber wirksam verhindert. Schließlich ist es günstig, die Sperrschieber in Mittellängsrichtung des Grundkörpers zu führen, weil prinzipiell die gesamte Grundkörperlänge als Verfahrweg für die Schieber nutzbar ist. Da die Schieber sehr flach sind und ihre Führungen entsprechend eine nur sehr geringe Innenhöhe aufweisen müssen, kann der gesamte Ratschengrundkörper sehr flach ausgestaltet sein. Darüber hinaus ist vorteilhaft, daß beim stufenweisen Entspannen des Gesperres die durch die Schieber verursachte Sperrkraft jeweils um 180° versetzt am Sperrad angreift. Die Sperrkräfte der Sperrschieber sind somit weit über den Umfang des Sperrades verteilt. Außerdem sind die einzelnen Zahnflanken nach dem Eingriff mit einem Sperrschieber über eine größere Umfangsstrecke außer Eingriff und können sich so gewissermaßen von der Sperrkraftbeaufschlagung durch die Sperrschieber erholen.

Gegenstand des Anspruchs 2 ist eine materialsparende und einfach zu fertigende Ausführungsform des Grundkörpers. Hierbei ist der eine Grundsperrschieber - wie bei Spannratschen allgemein bekannt - im Grundkörper neben dem bzw. den Sperrädern gelagert. Der erfindungsmäßig zweite Gabelsperrschieber ist in gabelartigen Verlängerungen der Grundkörperseitenwände auf der dem Grundsperrschieber abgewandten Seite des Sperrads gelagert. Insbesondere ist vorteilhaft, daß das zur Fertigung kleiner Ratschen vorhandene Grundwerkzeug nur leicht abgewandelt werden muß, nämlich lediglich um die gabelartigen Verlängerungen der Grundkörperseitenwände.

Durch die gleichebige Anordnung der Sperrschieber nach Anspruch 3 ist ein effizienter und die Zahnflanken des Sperrades schonender Kraftangriff durch die Sperrschieber gewährleistet. Die Ansprüche 4-6 betreffen eine vorteilhafte Spannhebel-Nockenkombination, mit welcher der Zurrstrang einerseits einfach und effizient spannbar ist und andererseits schrittweise wiederum lösbar ist.

Die Ansprüche 7 bis 9 betreffen einen konstruktiv einfachen und fertigungstechnisch günstigen Aufbau des Spannhebels. Der die Spannhebelseitenwände überbrückende Handgriff hat die Doppelfunktion eines Handgriffs einerseits und einer stabilisierenden Querverbindung der Spannhebelseitenwände andererseits. Die Ausführung des Spannhebels ist auf diese Weise sehr filigran und reduziert das Spannhebeleigengewicht vorteilhaft.

Die Ansprüche 10 bis 12 lehren den konstruktiv einfachen und fertigungstechnisch günstigen Aufbau des Spannratschengrundkörpers. Der Grundkörper weist auf diese Weise ein geringes Eigengewicht auf, was insbesondere bei den hier interessierenden kleinen Spannratschen vorteilhaft ist. Durch die gabelartige Gestaltung beider Grundkörperfreienden ist einerseits das Festende des Zurrstrangs leicht an der Konsole fixierbar und andererseits die Aufwickelwelle leicht am Grundkörper montierbar. Außerdem ist der symmetrische Aufbau der Spannratsche nach Anspruch 12 vorteilhaft. Infolge der Symmetrie können auch zahlreiche Gleichteile verbaut werden, was die Fertigungskosten für die Spannratsche senkt. Zudem bewirkt der symmetrische Aufbau der Spannratsche eine symmetrische Kraftverteilung bei anliegender Zurrspannung.

Die Merkmale der Ansprüche 13 und 14 dienen zur Verhinderung eines versehentlichen Überdrehens des Spannhebels in Spannrichtung vom Spannbereich irrtümlich in den Lösebereich. Die Merkmale der Ansprüche 15 bis 18 dienen der weiteren Verbesserung der Gebrauchssicherheit und der Gebrauchsfreundlichkeit der Spannratsche. Der Spannhebel muß zum Lösen der Zurrspannung lediglich in den Lösebereich verschwenkt werden und zwischen den Begrenzungsanschlägen des Lösebereichs hin- und herbewegt werden. Mit jedem Anschlag des Antriebsschiebers an einen der beiden Begrenzungsanschläge dreht die Aufwickelwelle um den Betrag einer halben Zahnteilung gegen die Spannrichtung zurück, was ein schrittweises Entspannen des Zurrstrangs bewirkt.

Durch die Maßnahmen der Ansprüche 19 bis 22 sind die Sperrschieber leicht zwischen ihren Extremsstellungen längsverfahrbar. Ferner sind mit den so gestalteten Sperrschiebern hohe Kräfte übertragbar. Schließlich sind die Sperrschieber in den Führungsschlitzen im Grundkörper leicht montierbar und bilden einen soliden und dauerhaften Formschluß mit dem Grundkörper aus.

Anhand der in den Zeichnungen dargestellten Ausführungsbeispiele ist die Erfindung mit weiteren erfindungswesentlichen Merkmalen geschildert. Es zeigen:
- Fig. 1: eine Seitenansicht der erfindungsmäßigen Spannratsche,
- Fig. 2: eine Seitenansicht des Zahnrichtgesperres und des Antriebszahnrichtgesperres in der Endposition des vom Grundkörper weggeschwenkten Spannhebels beim Spannen des Zurrstrangs,
- Fig. 3: eine Seitenansicht des Zahnrichtgesperres und des Antriebszahnrichtgesperres in der ersten Lösestellung bei durch die Entriegelungskurve ausgerücktem Grundsperrschieber,
- Fig. 4: eine Seitenansicht des Zahnrichtgesperres und des Antriebszahnrichtgesperres in einer zweiten Lösestellung bei durch die Entriegelungsnocke ausgerücktem Gabelsperrschieber,
- Fig. 5: die totale Lösestellung der Spannratsche bei sowohl von der Entriegelungsnocke ausgerücktem Gabelsperrschieber als auch durch die Lösenocke ausgerücktem Grundsperrschieber.

Die sich in Mittellängsrichtung 1 erstreckende Spannratsche 2 besteht im wesentlichen aus dem Grundkörper 3, der Aufwickelwelle 4, zwei auf der Aufwickelwelle 4 randseitig fixierten Sperrädern 5 und dem an der Aufwickelwelle 4 schwenkbar gelagerten Spannhebel 6. Der Zurrgurt 7 ist mit seinem als Gurtschlaufe 8 ausgebildeten Festende am Schraubbolzen 9 befestigt. Der Schraubbolzen 9 durchsetzt und überbrückt die beiden Grundkörperseitenwände 10 in der zur Mittellängsrichtung 1 senkrecht verlaufenden Querrichtung. An die Grundkörperseitenwände 10 sind neben der Aufwickelwelle 4 in Mittellängsrichtung 1 die gabelartigen Verlängerungen 11 angeformt. In die Grundkörperseitenwände 10 sind Führungsschlitze 12 für den Grundsperrschieber 13 eingeformt. Analog dazu sind Führungsschlitze 12 in die gabelartigen Verlängerungen 11 zur Lagerung des Gabelsperrschiebers 14 eingebracht. Der Grundsperrschieber 13 und der Gabelsperrschieber 14 sind in Mittellängsrichtung 1 jeweils gegen ein Federpaket 15 translatorisch verschiebbar.

Der Spannhebel 6 weist an seinem der Aufwickelwelle 4 abgewandten Freiende den Handgriff 16 auf. Der in das Sperrad 5 ebenfalls eingreifende Antriebsschieber 18 ist im Schieberführungsschlitz 17 verschieblich gelagert. Das Losende des Zurrgurts 7 ist in der zweiteiligen Aufwickelwelle 4 fixiert. Der konstruktive Aufbau der Aufwickelwelle 4 ist in der EP-A-0 455 085 detailliert beschrieben.

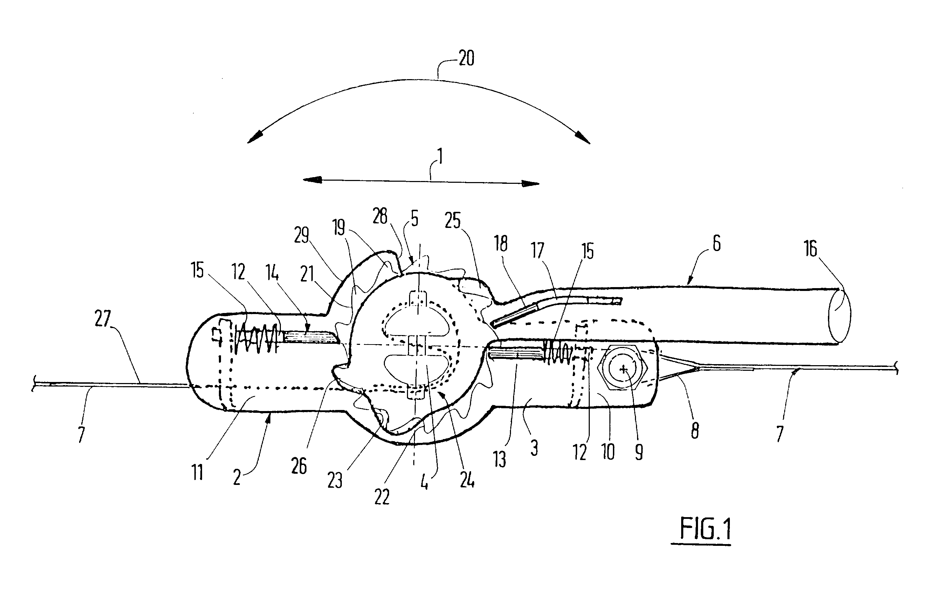

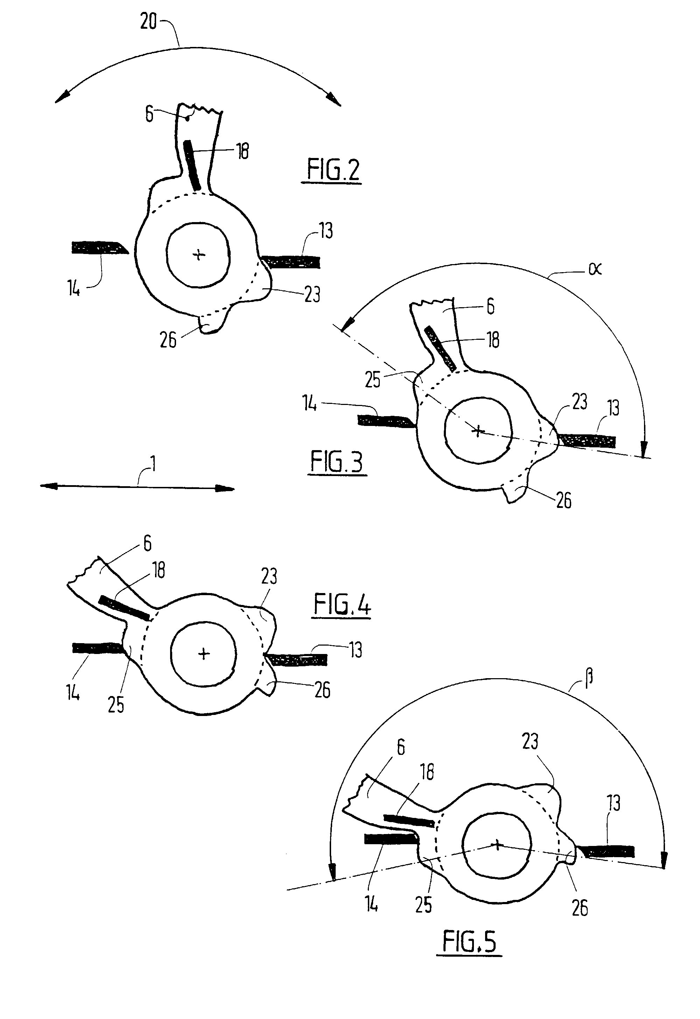

Zum Spannen des Zurrgurts 7 hintergreift der Antriebsschieber 18 einen Sperrzahn 19 des Sperrades 5. Zum Spannen des Zurrgurts 7 wird der Spannhebel 6 in Schwenkrichtung 20 verschwenkt, bis er seine in Fig. 2 dargestellte extreme Schwenkposition erreicht hat. Die Schwenkrichtung 20 des Spannhebels 6 entspricht hierbei der Drehrichtung des Sperrads 5 bzw. der Spannrichtung der Aufwickelwelle 4. Zum weiteren Spannen des Zurrgurts 7 wird der Spannhebel 6 gegen die Schwenkrichtung 20 auf den Grundkörper 2 in seine in Fig. 1 dargestellte Ruheposition zurückgeschwenkt. Der Antriebsschieber 18 gleitet hierbei über die abgerundeten vorderen Zahnflanken 21 der Sperrzähne 19 ohne eine entsprechende Drehung des Sperrads 5. Der Spannhebel 6 wird dann aus der in Fig. 1 dargestellten Ruheposition wiederum in Schwenkrichtung 20 in seine in Fig. 2 dargestellte Schwenkposition verschwenkt. Der Antriebsschieber 18 hintergreift hierbei die der gerundeten Zahnflanke 21 abgewandte gerade Zahnflanke 22 eines Sperrzahns 19 und treibt wiederum sowohl das Sperrad 5 als auch die damit drehfest verbundene Antriebswelle 4 in die mit der Schwenkrichtung 20 identischen Spannrichtung an.

Zum Lösen des Gesperres ist der Spannhebel 6 in Schwenkrichtung 20 über seine in Fig. 2 dargestellte Spannposition hinaus schwenkbar. Durch das Weiterschwenken des Spannhebels 6 über die in Fig. 2 dargestellte Spannposition hinaus gerät die Entriegelungskurve 23 an dem dem Handgriff 16 abgewandten Spannhebellagerende 24 mit dem Grundsperrschieber 13 derart in Eingriff, daß der Grundsperrschieber 13 gegen das Federpaket 15 im Führungsschlitz 12 in Mittellängsrichtung 1 verfahren wird (Fig. 3). Durch das Verfahren des Grundsperrschiebers 13 rückt der Grundsperrschieber 13 aus der Verzahnung 19 des Sperrades 5 aus, wodurch sich das Sperrad 5 um eine halbe Zahnteilung gegen die mit der Schwenkrichtung 20 identische Spannrichtung dreht, bis der Gabelsperrschieber 14 die gerade Zahnflanke 22 eines Sperrzahns 19 des Sperrades 5 hintergreift. Zum Ausrücken des Gabelsperrschiebers 14 aus der Verzahnung 19 wird der Spannhebel 6 derart weitergedreht, daß die Entriegelungskurve 23 mit dem Grundsperrschieber 13 außer Eingriff gerät und gleichzeitig die Entriegelungsnocke 25 den Gabelsperrschieber 14 beaufschlagt und gegen das Federpaket 15 im Führungsschlitz 12 in Mittellängsrichtung 1 aus der Verzahnung 19 des Sperrades 5 verfährt (Fig. 4). Das Sperrad 5 dreht sich auf diese Weise wieder um eine halbe Zahnteilung gegen die Spannrichtung zurück bis wiederum der Grundsperrschieber 13 die gerade Zahnflanke 22 eines Sperrzahns 19 des Sperrades 5 hintergreift. Zum weiteren schrittweisen Lösen wird der Spannhebel 6 gegen die Schwenkrichtung 20 in seine in Fig. 3 dargestellte Position zurückverfahren, so daß die Entriegelungsnocke 25 den Gabelsperrschieber 14 wiederum freigibt und er in Mittellängsrichtung 1 in seine in Fig. 2 dargestellte Ausgangsposition in die Verzahnung 19 zurückverfährt, während die Entriegelungskurve 23 den Grundsperrschieber 13 aus der Verzahnung 19 in Mittellängsrichtung 1 herausverfährt, so daß sich die Antriebswelle 4 und das Sperrad 5 wiederum um eine halbe Zahnteilung gegen die Schwenkrichtung 20 drehen.

Ist die Zurrspannung durch das vorbeschriebene schrittweise Entspannen im Zurrgurt 7 schrittweise abgebaut, wird der Spannhebel 6 zum vollständigen Entspannen der Vorrichtung in Schwenkrichtung 20 in seine in Fig. 5 dargestellte Endposition verfahren. In dieser Endposition rückt die Entriegelungsnocke 25 den Gabelsperrschieber 14 aus und die in Umfangsrichtung zwischen der Entriegelungsnocke 25 und der Entriegelungskurve 23 angeordnete Lösenocke 26 rückt entsprechend den Grundsperrschieber 13 in Mittellängsrichtung 1 aus. Der Winkel α zwischen der Entriegelungsnocke 25 und der Entriegelungskurve 23 beträgt etwa 150° (Fig. 3). Der Winkel β zwischen Entriegelungsnocke 25 und der Lösenocke 26 beträgt etwa 180-200° (Fig. 5).

In der in Fig. 5 dargestellten totalen Lösestellung sind sowohl der Grundsperrschieber 13 als auch der Gabelsperrschieber 14 als auch der Antriebsschieber 18 außer Eingriff mit der Verzahnung 19 des Sperrades 5, so daß durch eine Zugbewegung am Aufwickelende 27 des Zurrgurts 7 die Antriebswelle 4 gegen die Schwenkrichtung 20 so lange drehbar ist, bis das Aufwickelende 27 des Zurrgurts 7 und die Aufwickelwelle 4 außer Eingriff sind.

Das Aufwickelende 27 ist hierbei das der Gurtschlaufe 8 abgewandte Ende des Zurrgurts 7.

Der Antriebsschieber 18 im Spannhebel 6 liegt in seiner in Fig. 2 dargestellten Spannposition am Spannanschlag 28 am Grundkörper 3 an. Zum Verschwenken des Spannhebels 6 in die in Fig. 3,4 und 5 dargestellten Lösepositionen ist der Antriebsschieber 18 über den Spannanschlag 28 hinweg anhebbar und gleitet mit seiner Stirnseite auf dem als Gleitführung 29 wirksamen, den Spannanschlag 28 in Schwenkrichtung 20 benachbarten Bereich.

### Bezugszeichenliste

- 1: Mittellängsrichtung
- 2: Spannratsche
- 3: Grundkörper
- 4: Aufwickelwelle
- 5: Sperrad
- 6: Spannhebel
- 7: Zurrgurt
- 8: Gurtschlaufe
- 9: Schraubbolzen
- 10: Grundkörperseitenwand
- 11: gabelartige Verlängerung
- 12: Führungsschlitz
- 13: Grundsperrschieber
- 14: Gabelsperrschieber
- 15: Federpaket
- 16: Handgriff
- 17: Schieberführungsschlitz
- 18: Antriebsschieber
- 19: Sperrzahn
- 20: Schwenkrichtung
- 21: gerundete Zahnflanke
- 22: gerade Zahnflanke
- 23: Entriegelungskurve
- 24: Spannhebellagerende
- 25: Entriegelungsnocke
- 26: Lösenocke
- 27: Aufwickelende
- 28: Spannanschlag
- 29: Gleifführung

## Patentansprüche

1. Spannratsche (2) für einen Zurrstrang (7)
- mit einer an einem Grundkörper (3) gelagerten und drehantreibbaren Aufwickelwelle (4),
- mit einem lösbaren Zahnrichtgesperre zwischen Grundkörper (3) und Aufwickelwelle (4) zur Sicherung gegen ein Rückdrehen der Aufwickelwelle (4) beim Spannen im wesentlichen gebildet aus
-- einem an der Aufwickelwelle (4) drehfest gelagerten Sperrad (5) mit einer Verzahnung (19) und
-- zwei in jeweils separaten Führungen (12) im Grundkörper (3) längsverschiebbar gelagerten und abwechselnd in die Verzahnung (19) eingreifenden Sperrschiebern (13,14),
dadurch gekennzeichnet,
- daß die beiden Sperrschieber (13,14) bezogen auf das Sperrad (5) einander diametral gegenüberliegen und
- daß die Verschieberichtung der Sperrschieber (13,14) mit der Mittellängsrichtung (1) des Grundkörpers (3) im wesentlichen kongruent ist.

2. Spannratsche nach Anspruch 1,
dadurch gekennzeichnet,
- daß der Grundkörper (3) im wesentlichen U-förmig ist,
- daß die U-Schenkel die zueinander parallelen Grundkörperseitenwände (10) bilden,
- daß die Aufwickelwelle (4) an einem Ende des Grundkörpers (3) in Augen in den Grundkörperseitenwänden (10) gelagert ist,
- daß die Grundkörperseitenwände am Aufwickelwellenende des Grundkörpers (3) über die Augen hinaus gabelartig verlängert sind und
- daß in den Grundkörperseitenwänden Führungsschlitze (12) für den Grundsperrschieber (13) und in den gabelartien Verlängerungen (11) Führungsschlitze (12) für den Gabelsperrschieber (14) eingeformt sind.

3. Spannratsche nach Anspruch 2,
dadurch gekennzeichnet,
daß der Grundsperrschieber (13) und der Gabelsperrschieber (14) sich gleichebig zueinander bewegen.

4. Spannratsche nach einem oder mehreren der vorhergehenden Ansprüche,
gekennzeichnet durch
- durch einen auf der Aufwickelwelle (4) schwenkbar gelagerten Spannhebel (6) und
- ein zwischen Spannhebel (6) und Aufwickelwelle (4) wirksames Antriebs-Zahnrichtgesperre zum Wellendrehantrieb mittels eines am Spannhebel (6) in Führungsschlitzen (17) längsverschiebbar gelagerten und in die Verzahnung (19) des Sperrades (5) eingreifenden Antriebsschiebers (18).

5. Spannratsche nach Anspruch 4,
dadurch gekennzeichnet,
- daß der Spannhebel (6) am Umfang seines Lagerendes (24) eine Entriegelungsnocke (25) zum Ausrücken des Gabelsperrschiebers (14) trägt,
- daß in Umfangsrichtung neben der Entriegelungsnocke (25) um einen Winkel α von etwa 150° versetzt eine den Grundsperrschieber (13) beaufschlagende Entriegelungskurve (23) angeordnet ist derart, daß durch Hin- und Herschwenken des Spannhebels (6) der Gabelsperrschieber (14) und der Grundsperrschieber (13) alternierend aus der Sperradverzahnung (19) ausrückbar sind und
- daß in Umfangsrichtung neben der Entriegelungsnocke (25) um einen Winkel β von etwa 180° bis 200° versetzt eine den Grundsperrschieber (13) dauerhaft aus der Sperradverzahnung (19) ausrückende Lösenocke (26) angeordnet ist derart, daß bei Beaufschlagung des Grundsperrschiebers (13) mit der Lösenocke (26) der Gabelsperrschieber (14) von der Entriegelungsnocke (25) beaufschlagt ebenfalls aus der Sperradverzahnung (19) ausgerückt ist.

6. Spannratsche nach Anspruch 5,
dadurch gekennzeichnet,
daß die Entriegelungskurve (23) der Entriegelungsnocke (25) in Spannrichtung (20) vorauseilend benachbart am Umfang des Spannhebellagerendes (24) angeordnet ist und daß die Entriegelungskurve (23) der Lösenocke (26) in Spannrichtung (20) vorauseilend benachbart am Umfang des Spannhebellagerendes (24) angeordnet ist und daß die Entriegelungskurve (23) und die Lösenocke (26) der Entriegelungsnocke (25) in Spannrichtung (20) vorauseilend am Umfang des Spannhebellagerendes (24) angeordnet sind.

7. Spannratsche nach einem oder mehreren der vorhergehenden Ansprüche,
dadurch gekennzeichnet,
daß die Spannhebelseitenwände im wesentlichen parallel verlaufen und an den Spannhebelfreienden gabelartig aus dem Spannhebel (6) vorstehen, wobei an dem dem Spannhebellagerende (24) abgewandten Griffende ein die Spannhebelseitenwände parallel zur Aufwickelwelle (4) in Querrichtung überbrückender Handgriff (16) fixiert ist.

8. Spannratsche nach einem oder mehreren der vorhergehenden Ansprüche,
dadurch gekennzeichnet,
daß im Bereich zwischen Lagerende und Griffende ein hohlkastenartiges, in Querrichtung verlaufendes und in Richtung auf die Aufwickelwelle (4) offenes Querverbindungsjoch die Spannhebelseitenwände überbrückend miteinander verbindet.

9. Spannratsche nach einem oder mehreren der vorhergehenden Ansprüche,
dadurch gekennzeichnet,
daß der Antriebsschieber (18) in Schieberführungsschlitzen (17) in den Spannhebelseitenwänden gegen das Querverbindungsjoch federdruckbeaufschlagt und längsverfahrbar gelagert anliegt und seine der Aufwickelwelle (4) abgewandte Antriebsschieberstirnseite einen Greifbügel zum Längsverfahren in Richtung auf das Querverbindungsjoch trägt.

10. Spannratsche nach einem oder mehreren der vorhergehenden Ansprüche,
dadurch gekennzeichnet,
daß ein Schraubbolzen (9) die Grundkörperseitenwände (10) an einem Befestigungsfreiende des Grundkörpers (3) zur Befestigung des vorzugsweise als Gurtschlaufe (8) ausgebildeten Zurrstrangfreiendes in Querrichtung überbrückend durchsetzt und die Aufwickelwelle (4) dem Befestigungsfreiende in Mittellängsrichtung (1) entfernt in Lageraugen der Grundkörperseitenwände (10) drehbar gelagert ist.

11. Spannratsche nach einem oder mehreren der vorhergehenden Ansprüche,
dadurch gekennzeichnet,
daß das Sperrad (5) aus zwei im Bereich der Grundkörperseitenwände (10) von der Aufwickelwelle (4) getragenen Zahnscheiben gebildet ist.

12. Spannratsche nach einem oder mehreren der vorhergehenden Ansprüche,
gekennzeichnet durch
einen zu ihrer in Mittellängsrichtung (1) verlaufenden Mittellängsachse achsensymmetrischen Aufbau derart, daß die Aufwickelwelle (4) zwei Sperräder (5) trägt und zwei Grundkörperseitenwände (10) und entsprechend zwei Spannhebelseitenwände vorhanden sind.

13. Spannratsche nach einem oder mehreren der vorhergehenden Ansprüche,
dadurch gekennzeichnet,
daß der Spannhebel (6) in seiner Ruheposition nach Art eines Deckels auf dem Grundkörper (3) ruht und zum Drehantrieb der Aufwickelwelle (4) in Spannrichtung (20) in eine 80-100°-Position zum Grundkörper (3) schwenkbar ist, wobei der Anriebsschieber (18) mit seiner Stirnfläche einen Sperrzahn (19) des Sperrades (5) formschlüssig hintergreift.

14. Spannratsche nach einem oder mehreren der vorhergehenden Ansprüche,
dadurch gekennzeichnet,
daß der Antriebsschieber (18) in der 80-100°-Position des Spannhebels (6) in die Verzahnung (19) eingreifend in einem radial aus dem Umfang des Grundkörpers (3) hinausstehenden Spannanschlag (28) anliegt.

15. Spannratsche nach einem oder mehreren der vorhergehenden Ansprüche,
dadurch gekennzeichnet,
daß der Antriebsschiebe (18) zur Weiterschwenkbarkeit des Spannhebels (6) in Spannrichtung (20) über die 80-100°-Position hinaus durch Längsverschiebung in Richtung auf den Spannhebelhandgriff (16) aus der Verzahnung (19) hebbar ist und in dieser Außereingriffstellung seine Anlage gegen den Spannanschlag (28) aufhebbar ist.

16. Spannratsche nach einem oder mehreren der vorhergehenden Ansprüche,
dadurch gekennzeichnet,
daß der dem Spannanschlag (28) am Grundkörper (3) in Spannrichtung (20) benachbarte Bereich des Wellenlageraugenumfangs den Kopfkreisdurchmesser des benachbarten Sperrades (5) radial übersteht und derart konvex ausgerundet ist, daß er eine Gleitführung (29) für die dem Sperrad (5) zugewandte Antriebsschieberstirnseite bildet.

17. Spannratsche nach einem oder mehreren der vorhergehenden Ansprüche,
gekennzeichnet durch
eine Inaktivstellung des Antriebsschiebers (18) mit an der Gleitführung (29) anliegender Antriebsschieberstirnseite bei gleichzeitiger Außereingriffstellung mit der Verzahnung (19).

18. Spannratsche nach einem oder mehreren der vorhergehenden Ansprüche,
dadurch gekennzeichnet,
daß die Gleitführung (29) einen in Spannrichtung (20) von zwei radial aus dem Lageraugenumfang hinausstehenden Begrenzungsanschlägen eingefaßten Lösebereich bildet.

19. Spannratsche nach einem oder mehreren der vorhergehenden Ansprüche,
dadurch gekennzeichnet,
daß die Sperrschieber (13,14) in einem Abstand von einer halben Zahnteilung zueinander in die auf dem Sperrad (5) angeordnete Verzahnung (19) eingreifen.

20. Spannratsche nach einem oder mehreren der vorhergehenden Ansprüche,
gekennzeichnet durch
eine erste Lösestellung des Spannhebels (6) und des zwischen Grundkörper (3) und Aufwickelwelle (4) wirksamen Gesperres derart, daß der Antriebsschieber (18) am Begrenzungsanschlag anliegt und die Entriegelungskurve (23) den Grundsperrschieber (13) außer Eingriff mit der Verzahnung (19) hält.

21. Spannratsche nach einem oder mehreren der vorhergehenden Ansprüche,
gekennzeichnet durch
eine zweite Lösestellung des Spannhebels (6) und des zwischen Grundkörper (3) und Aufwickelwelle (4) wirksamen Gesperres derart, daß der Antriebsschieber (18) am anderen Begrenzungsanschlag anliegt und die Entriegelungsnocke (25) den Gabelsperrschieber (14) außer Eingriff mit der Verzahnung (19) hält.

22. Spannratsche nach einem oder mehreren der vorhergehenden Ansprüche,
gekennzeichnet durch
eine schrittweise Entspannbarkeit des Zurrstrangs (7) durch abwechselndes Hin- und Herbewegen des Spannhebels (6) zwischen der ersten und der zweiten Lösestellung.

## Claims

1. Tightening ratchet (2) for a lashing strap (7)
- having a take-up shaft (4) which is seated and rotationally drivable on a base body (3),
- having a releasable ratchet mechanism between base body (3) and take-up shaft (4) for locking against reverse turning of the take-up shaft (4) during the tightening, essentially formed from
- a ratchet wheel (5) with teeth (19) which is seated against relative rotation on the take-up shaft (4) and
- two ratchet slides (13,14) which are longitudinally displaceably seated each in separate guides (12) in the base body (3) and alternately engage the teeth (19),
characterized
- in that the two ratchet slides (13,14) are located diametrically opposite each other in relation to the ratchet wheel (5) and
- in that the displacement direction of the ratchet slides (13,14) is essentially congruent with the central longitudinal direction (1) of the base body (3).

2. Tightening ratchet according to Claim 1,
characterized
- in that the base body (3) is essentially U-shaped,
- in that the U-legs form the mutually parallel lateral base body walls (10),
- in that the take-up shaft (4) is seated at one end of the base body (3) in eyes in the lateral base body walls (10),
- in that the lateral base body walls are extended fork-like beyond the eyes at the winding-shaft end of the base body (3) and
- in that guide slits (12) for the base ratchet slide (13) are formed in the lateral base body walls and guide slits (12) for the fork ratchet slide (14) are formed in the fork-like extensions (11).

3. Tightening ratchet according to Claim 2,
characterized
- in that the base ratchet slide (13) and the fork ratchet slide (14) move in the same plane with respect to one another.

4. Tightening ratchet according to one or more of the preceding claims,
characterized by
- a tightening lever (6) which is pivotably seated on the take-up shaft (4) and
- a driving ratchet mechanism, operative between tightening lever (6) and take-up shaft (4), for rotationally driving the shaft by means of a drive slide (18) which is longitudinally displaceably seated in guide slits (17) on the tightening lever (6) and engages the teeth (19) of the ratchet wheel (5).

5. Tightening ratchet according to Claim 4,
characterized
- in that the tightening lever (6) carries on the periphery of its bearing end (24) an unlatching cam (25) for disengaging the fork ratchet slide (14),
- in that an unlatching curve (23), which acts upon the base ratchet slide (13), is disposed in the circumferential direction next to the unlatching cam (25) and offset by an angle α of approximately 150°, so that, by pivoting the tightening lever (6) back and forth, the fork ratchet slide (14) and the base ratchet slide (13) are alternatingly disengageable from the ratchet wheel teeth (19) and
- in that a releasing cam (26), which permanently disengages the base ratchet slide (13) from the ratchet wheel teeth (19), is disposed in the circumferential direction next to the unlatching cam (25) and offset by an angle β of approximately 180° to 200°, so that, when the base ratchet slide (13) is acted upon by the releasing cam (26), the fork ratchet slide (14), acted upon by the unlatching cam (25), is likewise disengaged from the ratchet wheel teeth (19).

6. Tightening ratchet according to Claim 5,
characterized
- in that the unlatching curve (23) is disposed ahead of the unlatching cam (25) in the tightening direction (20) and adjacent to it on the periphery of the tightening lever bearing end (24) and in that the unlatching curve (23) is disposed ahead of the releasing cam (26) in the tightening direction (20) and adjacent to it on the periphery of the tightening lever bearing end (24) and in that the unlatching curve (23) and the releasing cam (26) are disposed ahead of the unlatching cam (25) in the tightening direction (20) on the periphery of the tightening lever bearing end (24).

7. Tightening ratchet according to one or more of the preceding claims,
characterized
in that the lateral tightening lever walls extend essentially parallel and project fork-like from the tightening lever (6) at the free tightening lever ends, a handle (16), which bridges the lateral tightening lever walls in the transverse direction parallel to the take-up shaft (4), being fixed in place at the gripping end, which faces away from the tightening lever bearing end (24).

8. Tightening ratchet according to one or more of the preceding claims,
characterized
in that, in the region between bearing end and gripping end, a hollow-box-like transverse connecting yoke, which extends in the transverse direction and is open in the direction towards the take-up shaft (4), bridgingly connects the lateral tightening lever walls to each other.

9. Tightening ratchet according to one or more of the preceding claims,
characterized
in that the drive slide (18) rests spring-urged against the transverse connecting yoke and longitudinally movably seated in slide guide slits (17) in the lateral tightening lever walls and its drive slide end face which faces away from the take-up shaft (4) carries a gripping shackle for the longitudinal movement in the direction towards the transverse connecting yoke.

10. Tightening ratchet according to one or more of the preceding claims,
characterized
in that a screw bolt (9) passes through the lateral base body walls (10), bridgingly in the transverse direction, at a free fastening end of the base body (3) for fastening the free lashing strap end, preferably in the form of a strap loop (8), and the take-up shaft (4) is rotatably seated in bearing eyes of the lateral base body walls (10) remote from the free fastening end in the central longitudinal direction (1).

11. Tightening ratchet according to one or more of the preceding claims,
characterized
in that the ratchet wheel (5) is formed from two toothed discs carried by the take-up shaft (4) in the region of the lateral base body walls (10).

12. Tightening ratchet according to one or more of the preceding claims,
characterized by
a structure which is axially symmetrical with respect to the ratchet's central longitudinal axis extending in the central longitudinal direction (1), so that the take-up shaft (4) carries two ratchet wheels (5) and two lateral base body walls (10) and, correspondingly, two lateral tightening lever walls are present.

13. Tightening ratchet according to one or more of the preceding claims,
characterized
in that the tightening lever (6) in its rest position rests in the manner of a cover on the base body (3) and is pivotable into an 80-100° position with respect to the base body (3) for rotationally driving the take-up shaft (4) in the tightening direction (20), during which the drive slide (18) positively engages by its end face behind a ratchet tooth (19) of the ratchet wheel (5).

14. Tightening ratchet according to one or more of the preceding claims,
characterized
in that the drive slide (18), when engaging the teeth (19) with the tightening lever (6) in the 80-100° position, rests against a tightening stop (28) projecting radially out of the periphery of the base body (3).

15. Tightening ratchet according to one or more of the preceding claims,
characterized
in that the drive slide (18) can be lifted out of the teeth (19) and in this disengaged position can be freed from its resting against the tightening stop (28) by longitudinal displacement in the direction towards the tightening lever handle (16), so that the tightening lever (6) can be pivoted further in the tightening direction (20), beyond the 80-100° position.

16. Tightening ratchet according to one or more of the preceding claims,
characterized
in that the region of the shaft bearing eye periphery which is adjacent to the tightening stop (28) on the base body (3) in the tightening direction (20) projects radially beyond the tip diameter of the adjacent ratchet wheel (5) and is convexly rounded so that it forms a sliding guide (29) for the drive slide end face facing the ratchet wheel (5).

17. Tightening ratchet according to one or more of the preceding claims,
characterized by
an inactive position of the drive slide (18) with the drive slide end face resting against the sliding guide (29) and simultaneously being in a position of disengagement from the teeth (19).

18. Tightening ratchet according to one or more of the preceding claims,
characterized
in that the sliding guide (29) forms a loosening region enclosed in the tightening direction (20) by two limit stops projecting radially out of the bearing eye periphery.

19. Tightening ratchet according to one or more of the preceding claims,
characterized
in that the ratchet slides (13,14) engage the teeth (19) on the ratchet wheel (5) at a distance of half a tooth pitch with respect to each other.

20. Tightening ratchet according to one or more of the preceding claims,
characterized by
a first releasing position of the tightening lever (6) and of the ratchet mechanism operative between base body (3) and take-up shaft (4), such that the drive slide (18) rests against the limit stop and the unlatching curve (23) keeps the base ratchet slide (13) disengaged from the teeth (19).

21. Tightening ratchet according to one or more of the preceding claims,
characterized by
a second releasing position of the tightening lever (6) and of the ratchet mechanism operative between base body (3) and take-up shaft (4), such that the drive slide (18) rests against the other limit stop and the unlatching cam (25) keeps the fork ratchet slide (14) disengaged from the teeth (19).

22. Tightening ratchet according to one or more of the preceding claims,
characterized by
a capability for step-by-step slackening of the lashing strap (7) by alternate back and forth movement of the tightening lever (6) between the first and the second releasing position.

## Revendications

1. Dispositif tendeur à cliquet (2) pour sangle d'amarrage (7), comportant :
- un arbre d'enroulement (4) susceptible d'être entraîné en rotation et monté sur un corps de base (3),
- un dispositif de blocage unidirectionnel à dents libérable entre le corps de base (3) et l'arbre d'enroulement, pour le blocage à l'encontre d'une rotation en retour de l'arbre d'enroulement (4) lors de la mise sous tension, constitué sensiblement par :
-- une roue de blocage (5) montée solidairement en rotation sur l'arbre d'enroulement (4) et comportant une denture (19), et par
-- deux coulisseaux de blocage (13, 14) qui sont montés de façon longitudinalement mobile dans des guidages séparés respectifs (12) dans le corps de base (3) et qui s'engagent en alternance dans la denture (19),
caractérisé en ce que :
- les deux coulisseaux de blocage (13, 14) sont situés diamétralement en vis-à-vis par rapport à la roue de blocage (5), et en ce que
- la direction de déplacement des coulisseaux de blocage (13, 14) coïncide sensiblement avec la direction longitudinale médiane (1) du corps de base (3).

2. Dispositif tendeur à cliquet selon la revendication 1, caractérisé en ce que :
- le corps de base (3) est sensiblement en forme de U,
- les bras du U forment les parois latérales (10) parallèles l'une à l'autre du corps de base,
- l'arbre d'enroulement est monté à une extrémité du corps de base (3) dans des oeillets dans les parois latérales (10) du corps de base,
- les parois latérales du corps de base à l'extrémité de l'arbre d'enroulement du corps de base (3) sont prolongées en forme de fourche au-delà des oeillets, et en ce que :
- des fentes de guidage (12) pour le coulisseau de blocage de base (13) sont ménagées dans les parois latérales du corps de base, et des fentes de guidage (12) pour le coulisseau de blocage dans la fourche (14) sont ménagées dans les prolongements en forme de fourche (11).

3. Dispositif tendeur à cliquet selon la revendication 2, caractérisé en ce que le coulisseau de blocage de base (13) et le coulisseau de blocage dans la fourche (14) se déplacent dans le même plan l'un par rapport à l'autre.

4. Dispositif tendeur à cliquet selon l'une ou plusieurs des revendications précédentes, caractérisé par :
- un levier tendeur (6) monté en basculement sur l'arbre d'enroulement (4), et par
- un dispositif de blocage unidirectionnel à dents formant entraînement agissant entre le levier tendeur (6) et l'arbre d'enroulement (4) pour l'entraînement en rotation de l'arbre au moyen d'un coulisseau d'entraînement (18), qui est monté en déplacement longitudinal sur le levier tendeur (6) dans des fentes de guidage (17) et qui s'engage dans la denture (19) de la roue de blocage (5).

5. Dispositif tendeur à cliquet selon la revendication 4, caractérisé en ce que :
- le levier tendeur (6) porte à la périphérie de son extrémité de montage (24) une came de déverrouillage (25) pour dégager le coulisseau de blocage dans la fourche (14),
- une courbe de déverrouillage (23) sollicitant le coulisseau de blocage de base (13) est agencée en direction périphérique à côté de la came de déverrouillage (25) de façon décalée d'un angle α d'environ 150°, de telle sorte que par un basculement en va-et-vient du levier tendeur (6), le coulisseau de blocage dans la fourche (14) et le coulisseau de blocage de base (13) sont susceptibles d'être dégagés en alternance hors de la denture (19) de la roue de blocage, et en ce que
- une came de libération (26) dégageant durablement le coulisseau de blocage de base (13) hors de la denture (19) de la roue de blocage est agencée en direction périphérique à côté de la came de déverrouillage (25) de façon décalée d'un angle β d'environ 180° à 200°, de telle sorte que lors d'une sollicitation du coulisseau de blocage de base (13) avec la came de libération (26), le coulisseau de blocage dans la fourche (14) est également dégagé hors de la denture (19) de la roue de blocage, en étant sollicité par la came de déverrouillage (25).

6. Dispositif tendeur à cliquet selon la revendication 5, caractérisé en ce que la courbe de déverrouillage (23) est agencée en avance en direction de tension (20) par rapport à la came de déverrouillage (25) et au voisinage sur la périphérie de l'extrémité de montage (24) du levier tendeur, et en ce que la courbe de déverrouillage (23) est agencée en avance en direction de tension (20) par rapport à la came de libération (26) et au voisinage sur la périphérie de l'extrémité de montage (24) du levier tendeur, et en ce que la courbe de déverrouillage (23) et la came de libération (26) sont agencées en avance en direction de tension (20) par rapport à la came de déverrouillage (25) sur la périphérie de l'extrémité de montage (24) du levier tendeur.

7. Dispositif tendeur à cliquet selon l'une ou plusieurs des revendications précédentes, caractérisé en ce que les parois latérales du levier tendeur s'étendent sensiblement parallèlement et dépassent en forme de fourche hors du levier tendeur (6) au niveau des extrémités libres du levier tendeur, une poignée à main (16) étant fixée à l'extrémité de poignée détournée de l'extrémité de montage (24) du levier tendeur, laquelle relie les parois latérales du levier tendeur parallèlement à l'arbre d'enroulement (4) en direction transversale.

8. Dispositif tendeur à cliquet selon l'une ou plusieurs des revendications précédentes, caractérisé en ce que dans la région entre l'extrémité de montage et l'extrémité de poignée, un étrier de liaison transversal, en forme de caisson creux, s'étendant en direction transversale et ouvert en direction de l'arbre d'enroulement (4), relie en recouvrement les parois latérales du levier tendeur.

9. Dispositif tendeur à cliquet selon l'une ou plusieurs des revendications précédentes, caractérisé en ce que le coulisseau d'entraînement (18) est monté longitudinalement mobile dans des fentes de guidage (17) du coulisseau dans les parois latérales du levier tendeur, et s'appuie contre l'étrier de liaison transversal sous la sollicitation d'un ressort, et en ce que sa face frontale détournée de l'arbre d'enroulement (4) porte une anse de saisie pour le déplacement longitudinal en direction de l'étrier de liaison transversal.

10. Dispositif tendeur à cliquet selon l'une ou plusieurs des revendications précédentes, caractérisé en ce qu'un boulon (9) traverse en les reliant les parois latérales (10) du corps de base à une extrémité libre de fixation du corps de base (3) pour fixer en direction transversale l'extrémité libre de la sangle d'amarrage, réalisée de préférence sous forme d'une boucle (8), et en ce que l'arbre d'enroulement (4) est monté en rotation dans des oeillets de montage des parois latérales (10) du corps de base, en éloignement de l'extrémité libre de fixation en direction longitudinale médiane (1).

11. Dispositif tendeur à cliquet selon l'une ou plusieurs des revendications précédentes, caractérisé en ce que la roue de blocage (5) est formée par deux disques dentés portés par l'arbre d'enroulement (4) dans la région des parois latérales (10) du corps de base.

12. Dispositif tendeur à cliquet selon l'une ou plusieurs des revendications précédentes, caractérisé par une structure à symétrique axiale par rapport à son axe longitudinal médian s'étendant en direction longitudinale médiane (1), de telle sorte que l'arbre d'enroulement (4) porte deux roues de blocage (5), et dans laquelle sont prévues deux parois latérales (10) du corps de base et en correspondance deux parois latérales du levier tendeur.

13. Dispositif tendeur à cliquet selon l'une ou plusieurs des revendications précédentes, caractérisé en ce que le levier tendeur (6) repose, dans sa position de repos, à la manière d'un couvercle sur le corps de base, et en ce qu'il est susceptible de basculer dans une position tournée de 80 à 100° par rapport au corps de base (3) pour l'entraînement en rotation de l'arbre d'enroulement (4) en direction de tension (20), le coulisseau d'entraînement (18) engageant par l'arrière en coopération de formes une dent de blocage (19) de la roue de blocage (5), au moyen de sa surface frontale.

14. Dispositif tendeur à cliquet selon l'une ou plusieurs des revendications précédentes, caractérisé en ce que dans la position tournée de 80 à 100° du levier tendeur (6), le coulisseau d'entraînement (18) s'appuie sur une butée de tension (28) dépassant radialement hors de la périphérie du corps de base (3), en s'engageant dans la denture (19).

15. Dispositif tendeur à cliquet selon l'une ou plusieurs des revendications précédentes, caractérisé en ce que le coulisseau d'entraînement (18) est susceptible d'être soulevé hors de la denture (19) pour la poursuite du basculement du levier tendeur (6) en direction de tension (20) au-delà de la position tournée de 80 à 100° par un déplacement longitudinal en direction de la poignée à main (16) du levier tendeur, et en ce que son appui contre la butée de tension (28) peut être annulé dans cette position de dégagement.

16. Dispositif tendeur à cliquet selon l'une ou plusieurs des revendications précédentes, caractérisé en ce que la région de la périphérie des oeillets du montage d'arbre, voisine de la butée de tension (28) sur le corps de base (3) en direction de tension (20), dépasse radialement par rapport au diamètre du cercle de tête de la roue de blocage voisine (5), et en ce qu'elle est arrondie de façon convexe, de telle sorte qu'elle forme un guidage de coulissement (29) pour la face frontale du coulisseau d'entraînement orientée vers la roue de blocage (5).

17. Dispositif tendeur à cliquet selon l'une ou plusieurs des revendications précédentes, caractérisé par une position inactive du coulisseau d'entraînement (18) dans laquelle la surface frontale du coulisseau d'entraînement est appuyée contre le guidage de coulissement (29), et simultanément en position dégagée depuis la denture (19).

18. Dispositif tendeur à cliquet selon l'une ou plusieurs des revendications précédentes, caractérisé en ce que le guidage de coulissement (29) forme une région de libération encadrée en direction de tension (20) par deux butées de limitation dépassant radialement hors de la périphérie des oeillets de montage.

19. Dispositif tendeur à cliquet selon l'une ou plusieurs des revendications précédentes, caractérisé en ce que les coulisseaux de blocage (13, 14) s'engagent dans la denture (19) agencée sur la roue de blocage (5) à une distance égale à la moitié d'un pas de dent l'un par rapport à l'autre.

20. Dispositif tendeur à cliquet selon l'une ou plusieurs des revendications précédentes, caractérisé par une première position de libération du levier tendeur (6) et du dispositif de blocage agissant entre le corps de base (3) et l'arbre d'enroulement, de telle sorte que le coulisseau d'entraînement (18) s'appuie contre la butée de limitation et que la courbe de déverrouillage (23) maintient le coulisseau de blocage de base (13) hors d'engagement avec la denture (19).

21. Dispositif tendeur à cliquet selon l'une ou plusieurs des revendications précédentes, caractérisé par une seconde position de libération du levier tendeur (6) et du dispositif de blocage agissant entre le corps de base (3) et l'arbre d'enroulement (4), de telle sorte que le coulisseau d'entraînement (18) s'appuie contre l'autre butée de limitation et que la came de déverrouillage (25) maintient le coulisseau de blocage dans la fourche (14) hors d'engagement avec la denture (19).

22. Dispositif tendeur à cliquet selon l'une ou plusieurs des revendications précédentes, caractérisé par la possibilité d'une libération par étapes de la sangle d'amarrage (7) par un déplacement alternant en va-et-vient du levier tendeur (6) entre la première position de libération et la seconde position de libération.
